# EUROPEAN PATENT APPLICATION

(11) **EP 3 812 934 A1**
(43) Date of publication of application: **28.04.2021**
(21) Application number: 19846084.2
(22) Date of filing: 10.06.2019
(51) Int. Cl.: G06F 21/31

(54) **PRIVACY MANAGEMENT SYSTEM FOR INTELLIGENT DEVICE AND SOCIAL SOFTWARE**

(30) Priority: 09.08.2018 CN 201810931576
(71) Applicant: Huzhou Shenmai Technology Co., Ltd., Huzhou, Zhejiang 313008 (CN)
(72) Inventor: TAN, Ningmin, Chongqing 404024 (CN)
(74) Representative: Sach, Greg Robert
(86) International application number: PCT/CN2019/090592
(87) International publication number: WO 2020/029678

(57) **Abstract**

A privacy management system for smart devices and social software is disclosed. A privacy unlocking module includes a gesture capturing unit, a password setting unit and an unlocking unit. The gesture capturing unit is configured to capture a gesture motion operated by a user on a screen of a mobile terminal. The system is set by the user password library through the password setting unit. The unlocking unit includes a people number recognition unit, an identity recognition unit and a space setting unit. The people number recognition unit is connected with the control unit for recognizing the number of people in a defined area. The identity recognition unit is connected with the control unit for recognizing the identity of the user in the area. The space setting unit is connected with the control unit for setting a space area as a working section.

## Description

### TECHNICAL FIELD

The present disclosure relates to a privacy management system for preventing misoperation lock, privacy protection and encryption, and more specifically, to a privacy management system for smart devices and social software.

### BACKGROUND

At present, in order to solve the security problem, most intelligent devices set the unlocking password protection mode, and use digital symbol password, gesture password, fingerprint identification and other methods to unlock the device. When unlocking the digital symbol password, in order to avoid human attempts to decipher the password for many times, the device usually limits the number of wrong password input. Once the number of password input exceeds the specified number, the device will be completely locked for a period of time or forever, and can only be unlocked at a specified place. This ensures the security of the device. But in actual use, due to some families have children and other factors, it will cause misoperation. Once the device is completely locked, it will be very troublesome to unlock, affecting the normal use of users, and easy to cause personal privacy leakage.

### SUMMARY

The technical problem to be solved by the present disclosure is to provide a privacy management system for smart devices and social software, which can avoid complete locking of the device caused by misoperation and prevent leakage of personal privacy.

To solve the above technical problems, the present disclosure adopts the following technical scheme.

A privacy management system for smart devices and social software is provided. A privacy unlocking module includes a gesture capturing unit, a password setting unit and an unlocking unit. The gesture capturing unit is configured to capture a gesture motion operated by a user on a screen of a mobile terminal, and the gesture capture unit, the password setting unit and the unlocking unit are all connected with the screen of the mobile terminal. The system password library is set by the user through the password setting unit, and when the user selects to open a certain content in the smart device or the social software, a password input dialog box pops up on the screen.

Further, the privacy management system for smart devices and social software includes the following steps:
Step 1: setting, by the user, an initial password on the smart device or the software, and recording, by the intelligent device or software, the initial password;
Step 2: defining, by the intelligent device or software, a length of the recorded password as N, and defining a length of a password segment as *A*;
Step 3: extracting the password segment of the length *A* at any position in the password of the length N;
Step 4: repeating Step 3 until the A-length password segments at all positions in the N-length password are extracted, and defining a set of all the extracted password segments as a judgment password set *Q*;
Step 5: inputting, by the user, the password on the smart device or software to unlock the smart device or software;
Step 6: collecting, by the smart device or software, the input password, and extracting all the A-length password segments from the input password according to rules of Step 3 and Step 4, and defining a set of all the password segments extracted as an input password segment set *B*;
Step 7: comparing the password segments of the input password segment set *B* with all the passwords of the judgment password set *Q* in turn;
Step 8: marking the input password as an alert password if any password segment taken out from the input password segment set *B* matches any password of the judgment password set *Q*;
Step 9: locking the smart device or software completely so that unlocking is impossible if an occurrence frequency of the alert password is equal to a set value m;
Step 10: popping up, by an encryption dialog box, to let the user select the content to be encrypted in the device or software without prompting the password error if all the password segments taken out from the input password segment set *B* are different from the password segments of the judgment password set *Q*; it is the same as the first encryption process; at the same time, it can prevent the smart device or software from being locked by misoperation and increase the security and privacy of the smart device or software.

Further, the initial password can be set as a digital password, a symbol password, or a combination of both, as well as a gesture graphic password.

Further, if the initial password is the digital password, the symbol password or the combination of both, the password length N and the password segment length *A* are defined, and an A-bit password segment is taken out starting from the first bit of the password as the first password segment, then an A-bit password segment is taken out starting from the second bit of the password as the second password segment until an *A*-bit password segment is taken out starting from the (*N-A*+*1*)*th* bit of the password as the last password segment. All of the password segments taken out are stored in the judgment password set *Q*.

Further, if the initial password is the gesture graphic password, a gesture nodes number N and a password segment nodes number *A* are defined, and an A-node password segment is taken out starting from the first node of the password as the first password segment, then an A-node password segment is taken out starting from the second node of the password as the second password segment until an *A*-node password segment is taken out starting from the (*N-A*+*1*)*th* node of the password as the last password segment; all of the password segments taken out are stored in the judgment password set *Q*.

Further, in Step 9, if the smart device or software is locked completely so that unlocking is impossible, a special unlocking system is needed for unlocking.

Further, the special unlocking system includes a control unit, a people number recognition unit, an identity recognition unit, a mobile device or software login unit, a storage unit and a space setting unit. The people number recognition unit is connected with the control unit for recognizing the number of people in a defined area. The identity recognition unit is connected with the control unit for recognizing the identity of the user in the area. The mobile device or software login unit is connected with the control unit for connection and login of the mobile device or software with the system. The storage unit is connected with the control unit for data storage. The space setting unit is connected with the control unit for setting a space area as a working section.

Further, the people number recognition unit collects a data in the space area set by the space setting unit and analyzes and processes the collected data to obtain the number of people in the space area. A specific process is as follows:
acquiring, by a data acquisition module of the people number recognition unit, the data of the space area set by the space setting unit; wherein the acquired data includes one or more of image, distance, infrared imaging, video and sound;
setting a training model of human form in a calculation and analysis module of the people number recognition unit;
denoising, by the people number recognition unit, the acquired data;
analyzing and processing the denoised data, acquiring a human form data therein, segmenting the corresponding data and recording the number of segments;
comparing the segmented data with the training model, judging a human form according to characteristics of the training model, and recording that a number of people is 1;
comparing, continuously, the remaining segmented data with the training model, and increasing the number of people by 1 if the corresponding data is consistent to characteristics of the training model;
extracting a final number of people *X* after all the segmented data are compared; unlocking the system if = 1, that is, only one person is in the set space area; or not unlocking the system if *X*>1, that is, more than one person is in the set space area.

Further, a training process of the training model of human form is as follows:
selecting and inputting 100-5000 typical human form data into the people number recognition unit, and storing the 100-5000 typical human form data in the storage unit as an initial original training sample;
analyzing and processing a data collected by the human number recognition unit, judging the collected date as a human form data if the collected data is consistent with the original training sample, adding the human form data into the training sample and obtaining an extended sample;
comparing, continuously, the data collected by the human number recognition unit with the extended sample if the collected data is not consistent with the original training sample, and judging the collected date as a human form data if the collected data is consistent with characteristics of the extended sample.

In comparison with the prior art, the present disclosure has the following advantages and effects. In the intelligent password unlocking method, only after the user inputs the correct several-digit password and the sequence is completely correct, the number of times of password is calculated once. If that number of errors exceed the set number of times, the equipment is completely locked. So that when children or other people operate wrongly, because the password is not known, the device cannot be locked, thus avoiding the trouble cause by the misoperation. At the same time, its security is still highly guaranteed. If the system is completely locked, the system cannot be unlocked until one person goes to the designated place, so as to increase the security and privacy of the system.

### DESCRIPTION OF THE DRAWINGS

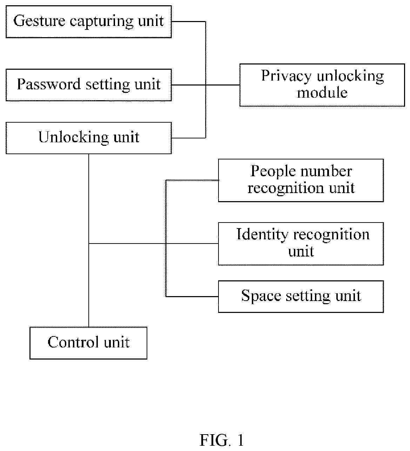

FIG. 1 is a schematic diagram of the working structure of a privacy management system for smart devices and social software according to the present invention.

### DETAILED DESCRIPTION OF EMBODIMENTS

In the following, the disclosure will be further described by way of specific embodiments which are illustrative of the disclosure and in which the disclosure is not limited to the following embodiments.

A privacy management system for smart devices and social software is provided. A privacy unlocking module includes a gesture capturing unit, a password setting unit and an unlocking unit. The gesture capturing unit is configured to capture a gesture motion operated by a user on a screen of a mobile terminal, and the gesture capture unit, the password setting unit and the unlocking unit are all connected with the screen of the mobile terminal. The system password library is set by the user through the password setting unit, and when the user selects to open a certain content in the smart device or the social software, a password input dialog box pops up on the screen.

The privacy management system for smart devices and social software includes the following steps:
Step 1: setting, by the user, an initial password on the smart device or the software,
and recording, by the intelligent device or software, the initial password;
Step 2: defining, by the intelligent device or software, a length of the recorded password as N, and defining a length of a password segment as A;
Step 3: extracting the password segment of the length *A* at any position in the password of the length N;
Step 4: repeating Step 3 until the A-length password segments at all positions in the N-length password are extracted, and defining a set of all the extracted password segments as a judgment password set *Q*;
Step 5: inputting, by the user, the password on the smart device or software to unlock the smart device or software;
Step 6: collecting, by the smart device or software, the input password, and extracting all the A-length password segments from the input password according to rules of Step 3 and Step 4, and defining a set of all the password segments extracted as an input password segment set *B*;
Step 7: comparing the password segments of the input password segment set *B* with all the passwords of the judgment password set *Q* in turn;
Step 8: marking the input password as an alert password if any password segment taken out from the input password segment set *B* matches any password of the judgment password set *Q*;
Step 9: locking the smart device or software completely so that unlocking is impossible if an occurrence frequency of the alert password is equal to a set value m;
Step 10: popping up, by an encryption dialog box, to let the user select the content to be encrypted in the device or software without prompting the password error if all the password segments taken out from the input password segment set *B* are different from the password segments of the judgment password set *Q*; it is the same as the first encryption process; at the same time, it can prevent the smart device or software from being locked by misoperation and increase the security and privacy of the smart device or software.

The initial password can be set as a digital password, a symbol password, or a combination of both, as well as a gesture graphic password.

If the initial password is the digital password, the symbol password or the combination of both, the password length N and the password segment length A are defined, and an A-bit password segment is taken out starting from the first bit of the password as the first password segment, then an A-bit password segment is taken out starting from the second bit of the password as the second password segment until an A-bit password segment is taken out starting from the (*N-A*+1)*th* bit of the password as the last password segment. All of the password segments taken out are stored in the judgment password set *Q*.

If the initial password is the gesture graphic password, a gesture nodes number N and a password segment nodes number *A* are defined, and an A-node password segment is taken out starting from the first node of the password as the first password segment, then an A-node password segment is taken out starting from the second node of the password as the second password segment until an *A*-node password segment is taken out starting from the (*N-A*+1)*th* node of the password as the last password segment; all of the password segments taken out are stored in the judgment password set *Q*.

In Step 9, if the smart device or software is locked completely so that unlocking is impossible, a special unlocking system is needed for unlocking. The special unlocking system includes a control unit, a people number recognition unit, an identity recognition unit, a mobile device or software login unit, a storage unit and a space setting unit. The people number recognition unit is connected with the control unit for recognizing the number of people in a defined area. The identity recognition unit is connected with the control unit for recognizing the identity of the user in the area. The mobile device or software login unit is connected with the control unit for connection and login of the mobile device or software with the system. The storage unit is connected with the control unit for data storage. The space setting unit is connected with the control unit for setting a space area as a working section.

The people number recognition unit collects a data in the space area set by the space setting unit and analyzes and processes the collected data to obtain the number of people in the space area. A specific process is as follows:
acquiring, by a data acquisition module of the people number recognition unit, the data of the space area set by the space setting unit; wherein the acquired data includes one or more of image, distance, infrared imaging, video and sound;
setting a training model of human form in a calculation and analysis module of the people number recognition unit;
denoising, by the people number recognition unit, the acquired data;
analyzing and processing the denoised data, acquiring a human form data therein, segmenting the corresponding data and recording the number of segments;
comparing the segmented data with the training model, judging a human form according to characteristics of the training model, and recording that a number of people is 1;
comparing, continuously, the remaining segmented data with the training model, and increasing the number of people by 1 if the corresponding data is consistent to characteristics of the training model; and
extracting a final number of people *X* after all the segmented data are compared; unlocking the system if *X*=1, that is, only one person is in the set space area; or not unlocking the system if *X*>1, that is, more than one person is in the set space area.

A training process of the training model of human form is as follows:
selecting and inputting 100-5000 typical human form data into the people number recognition unit, and storing the 100-5000 typical human form data in the storage unit as an initial original training sample;
analyzing and processing a data collected by the human number recognition unit, judging the collected date as a human form data if the collected data is consistent with the original training sample, adding the human form data into the training sample and obtaining an extended sample; and
comparing, continuously, the data collected by the human number recognition unit with the extended sample if the collected data is not consistent with the original training sample, and judging the collected date as a human form data if the collected data is consistent with characteristics of the extended sample.

In comparison with the prior art, the present disclosure has the following advantages and effects. In the intelligent password unlocking method, only after the user inputs the correct several-digit password and the sequence is completely correct, the number of times of password is calculated once. If that number of errors exceed the set number of times, the equipment is completely locked. So that when children or other people operate wrongly, because the password is not known, the device cannot be locked, thus avoiding the trouble cause by the misoperation. At the same time, its security is still highly guaranteed. If the system is completely locked, the system cannot be unlocked until one person goes to the designated place, so as to increase the security and privacy of the system.

Described above are merely illustrative of the disclosure to enable those skilled in the art to implement or use the disclosure, and are not intended to limit the disclosure. It should be understood that any modifications, replacements or changes made by those skilled in the art without departing from the spirit of the disclosure should fall within the scope of the disclosure.

## Claims

1. A privacy management system for smart devices and social software, wherein a privacy unlocking module comprises a gesture capturing unit, a password setting unit and an unlocking unit; the gesture capturing unit is configured to capture a gesture motion operated by a user on a screen of a mobile terminal, and the gesture capture unit, the password setting unit and the unlocking unit are all connected with the screen of the mobile terminal; the system password library is set by the user through the password setting unit, and when the user selects to open a certain content in the smart device or the social software, a password input dialog box pops up on the screen.

2. The privacy management system for smart devices and social software, comprising the following steps:
Step 1: setting, by the user, an initial password on the smart device or the software, and recording, by the intelligent device or software, the initial password;
Step 2: defining, by the intelligent device or software, a length of the recorded password as *N,* and defining a length of a password segment as *A*;
Step 3: extracting the password segment of the length *A* at any position in the password of the length *N*;
Step 4: repeating Step 3 until the *A*-length password segments at all positions in the *N*-length password are extracted, and defining a set of all the extracted password sgments as a judgment password set *Q*;
Step 5: inputting, by the user, the password on the smart device or software to unlock the smart device or software;
Step 6: collecting, by the smart device or software, the input password, and extracting all the *A*-length password segments from the input password according to rules of Step 3 and Step 4, and defining a set of all the password segments extracted as an input password segment set *B*;
Step 7: comparing the password segments of the input password segment set *B* with all the passwords of the judgment password set *Q* in turn;
Step 8: marking the input password as an alert password if any password segment taken out from the input password segment set *B* matches any password of the judgment password set *Q*;
Step 9: locking the smart device or software completely so that unlocking is impossible if an occurrence frequency of the alert password is equal to a set value *m*;
Step 10: popping up, by an encryption dialog box, to let the user select the content to be encrypted in the device or software without prompting the password error if all the password segments taken out from the input password segment set *B* are different from the password segments of the judgment password set *Q*; it is the same as the first encryption process; at the same time, it can prevent the smart device or software from being locked by misoperation and increase the security and privacy of the smart device or software.

3. The privacy management system for smart devices and social software of claim 1, wherein the initial password can be set as a digital password, a symbol password, or a combination of both, as well as a gesture graphic password.

4. The privacy management system for smart devices and social software of claim 2, wherein if the initial password is the digital password, the symbol password or the combination of both, the password length *N* and the password segment length *A* are defined, and an *A*-bit password segment is taken out starting from the first bit of the password as the first password segment, then an *A*-bit password segment is taken out starting from the second bit of the password as the second password segment until an *A*-bit password segment is taken out starting from the (*N-A*+*1*)*th* bit of the password as the last password segment; all of the password segments taken out are stored in the judgment password set *Q*.

5. The privacy management system for smart devices and social software of claim 2, wherein if the initial password is the gesture graphic password, a gesture nodes number *N* and a password segment nodes number *A* are defined, and an A-node password segment is taken out starting from the first node of the password as the first password segment, then an *A*-node password segment is taken out starting from the second node of the password as the second password segment until an *A*-node password segment is taken out starting from the (*N-A*+*1*)*th* node of the password as the last password segment; all of the password segments taken out are stored in the judgment password set *Q*.

6. The privacy management system for smart devices and social software of claim 2, wherein in Step 9, if the smart device or software is locked completely so that unlocking is impossible, a special unlocking system is needed for unlocking.

7. The privacy management system for smart devices and social software of claim 1, wherein the special unlocking system comprises a control unit, a people number recognition unit, an identity recognition unit, a mobile device or software login unit, a storage unit and a space setting unit; the people number recognition unit is connected with the control unit for recognizing the number of people in a defined area; the identity recognition unit is connected with the control unit for recognizing the identity of the user in the area; the mobile device or software login unit is connected with the control unit for connection and login of the mobile device or software with the system; the storage unit is connected with the control unit for data storage; the space setting unit is connected with the control unit for setting a space area as a working section.

8. The privacy management system for smart devices and social software of claim 1, wherein the people number recognition unit collects a data in the space area set by the space setting unit and analyzes and processes the collected data to obtain the number of people in the space area; a specific process is as follows:
acquiring, by a data acquisition module of the people number recognition unit, the data of the space area set by the space setting unit; wherein the acquired data comprises one or more of image, distance, infrared imaging, video and sound;
setting a training model of human form in a calculation and analysis module of the people number recognition unit;
denoising, by the people number recognition unit, the acquired data;
analyzing and processing the denoised data, acquiring a human form data therein, segmenting the corresponding data and recording the number of segments;
comparing the segmented data with the training model, judging a human form according to characteristics of the training model, and recording that a number of people is 1;
comparing, continuously, the remaining segmented data with the training model, and increasing the number of people by 1 if the corresponding data is consistent to characteristics of the training model; and
extracting a final number of people *X* after all the segmented data are compared; unlocking the system if *X*=1, that is, only one person is in the set space area; or not unlocking the system if *X*>*1,* that is, more than one person is in the set space area.

9. The privacy management system for smart devices and social software of claim 7, wherein a training process of the training model of human form is as follows:
selecting and inputting 100-5000 typical human form data into the people number recognition unit, and storing the 100-5000 typical human form data in the storage unit as an initial original training sample;
analyzing and processing a data collected by the human number recognition unit, judging the collected date as a human form data if the collected data is consistent with the original training sample, adding the human form data into the training sample and obtaining an extended sample; and
comparing, continuously, the data collected by the human number recognition unit with the extended sample if the collected data is not consistent with the original training sample, and judging the collected date as a human form data if the collected data is consistent with characteristics of the extended sample.
